# EUROPÄISCHE PATENTSCHRIFT

(11) **EP 3 969 189 B1**
(45) Veröffentlichungstag und Bekanntmachung des Hinweises auf die Patenterteilung: **14.06.2023**
(21) Anmeldenummer: 20727819.3
(22) Anmeldetag: 06.05.2020
(51) Int. Cl.: B05D 5/02

(54) **VERFAHREN ZUR HERSTELLUNG EINES MATTIERTEN MIT EINER ANTI-FINGERPRINT-BESCHICHTUNG VERSEHENEN TRÄGERMATERIALS**
METHOD FOR PRODUCING A MATT SUBSTRATE MATERIAL PROVIDED WITH AN ANTI-FINGERPRINT COATING
PROCÉDÉ DE PRODUCTION D'UN MATÉRIAU DE SUPPORT MAT MUNI D'UN REVÊTEMENT ANTI-TRACES DE DOIGT

(30) Priorität: 13.05.2019 EP 19174108
(43) Veröffentlichungstag der Anmeldung: 23.03.2022
(73) Patentinhaber: Flooring Technologies Ltd., Kalkara SCM1001 (MT)
(72) Erfinder: KALWA, Norbert, 32805 Horn-Bad Meinberg (DE); HASCH, Joachim, 10317 Berlin (DE); STIEWE, Bernd, 33039 Nieheim (DE)
(74) Vertreter: Maikowski & Ninnemann Patentanwälte Partnerschaft mbB
(86) Internationale Anmeldenummer: PCT/EP2020/062603
(87) Internationale Veröffentlichungsnummer: WO 2020/229267

(56) Entgegenhaltungen:
- EP-A1- 2 808 462
- WO-A1-2013/032387
- US-A1- 2013 273 244
- US-B2- 7 507 440

## Beschreibung

Die vorliegende Erfindung betrifft ein Verfahren zur Herstellung eines mattierten mit mindestens einer Anti-Fingerprint-Beschichtung versehenen Trägermaterials, insbesondere eine mit einem Dekor versehene Holzwerkstoffplatte oder eine Papierlage.

### Beschreibung

Die Verwendung von Holzwerkstoffplatten in der Möbelindustrie, als Fußbodenbeläge oder auch zum Verkleiden von Wänden und Decken erfordert eine Bearbeitung bzw. Veredelung der Oberfläche der Holzwerkstoffplatten. Üblicherweise werden im Falle der genannten Anwendungsgebiete die Holzwerkstoffplatten mit einem imprägnierten Dekorpapier beschichtet. Der Vielfältigkeit an verschieden gemusterten Dekorpapieren sind keine Grenzen gesetzt, so dass Holzwerkstoffplatten mit einer Vielzahl von unterschiedlichen Dekoren wie z.B. Stein- oder Holzdekoren erhältlich sind. Zur Erhöhung der Verschleißfestigkeit werden auf das Dekorpapier Overlays aufgebracht. Overlays sind dünne, transparente Papiere , welche typischerweise bereits mit einem Melaminharz getränkt wurden Es sind ebenfalls Overlays erhältlich, in denen bereits abriebfeste Partikel, wie zum Beispiel Korundpartikel in das Harz des Overlays eingemischt sind, um die Abriebfestigkeit des Laminats bzw. der Holzwerkstoffplatte zu erhöhen.

Als Alternative zur Verwendung von Dekorpapieren auf Holzwerkstoffplatten hat sich in der Vergangenheit das direkte Bedrucken von Holzwerkstoffplatten entwickelt, da ein Bedrucken von Papier und dessen nachträglichem Kaschieren oder Direktbeschichten auf die Holzwerkstoffplatte entfällt.

Auf das im Direktdruck aufgebrachte Dekor werden anschließend mehrere flüssige wärmehärtbare Harzschichten aufgetragen, die zur Erhöhung der Verschleißfestigkeit abriebfeste Partikel enthalten können. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz und/oder Melamin-Harnstoff-Formaldehyd-Harz. Ein Verfahren zur Herstellung der beschriebenen Flüssigoverlay-Schicht ist unter anderem in der EP 233 86 93 A1 beschrieben. Hierbei erfolgt zunächst nach Reinigung der Oberfläche einer Holzwerkstoffplatte das Aufbringen einer ersten oberen Korundpartikel enthaltende Harzschicht auf die Holzwerkstoffplatte, ein Trocknen dieser ersten Harzschicht z.B. bis auf eine Restfeuchte von 6 bis 10 %, anschließendes Aufbringen einer zweiten Zellulosefasern enthaltenen Harzschicht auf die Holzwerkstoffplatte, wiederholtes Trocknen bzw. Antrocknen der zweiten Harzschicht z.B. bis auf eine Restfeuchte von 6 bis 10 %, Aufbringen einer mindestens dritten Glaspartikel enthaltenden Harzschicht auf die Holzwerkstoffplatte mit anschließendem Antrocknen der dritten Harzschicht, z.B. ebenfalls auf eine Restfeuchte von 4 bis 8 % und ein finales Verpressen des Schichtaufbaus unter Druck- und Temperatureinfluss. Durch die Verwendung eines Flüssigoverlays kann auf das sonst typischerweise vorgesehene Overlaypapier verzichtet werden. Das Flüssigoverlay kann sowohl auf die Oberseite als auch die Unterseite der Holzwerkstoffplatte aufgetragen werden. Nachteilig bei der Verwendung eines Flüssigoverlays sind der apparative Aufwand und der damit verbundene Platzbedarf. Insbesondere die Trocknungsschritte nach jedem Harzauftrag erfordern die Verwendung von Konvektionstrocknern und der dazu erforderlichen Abluftbehandlung. Als Alternative zum Flüssigoverlay wird in WO 2013/032387 A eine Schicht aus einem pulverförmigen Formaldehyd-Harz vorgeschlagen. Diese Schicht wird auf ein Trägermaterial, z.B. eine Papierlage oder eine Holzwerkstoffplatte, angebracht und anschließend angeschmolzen. Danach folgt ein Trocknen und Härten des Schichtaufbaus.

Neben der Frage der Bereitstellung der Harzschicht ist auch die Frage der Oberflächengestaltung und Oberflächenstrukturierung dieser Produkte von Bedeutung. Dies gilt besonders bei der Verwendung von bedruckten Holzwerkstoffplatten für Inneneinrichtungsgegenstände wie Möbel, deren Oberflächen stark durch Anfassen, Reinigen usw. beansprucht werden. Dabei wird häufig besonders negativ bewertet, wenn auf Grund der Oberflächengestaltung und Beleuchtungsbedingungen eine besonders gute visuelle Beurteilung möglich ist. Ein sehr prägnantes Beispiel hierfür sind Hochglanzfronten in Küchen. Bei diesen Fronten ist besonders dann, wenn sie angefasst werden, häufig eine Abzeichnung der Fingerabdrücke feststellbar. Dies gilt besonders dann, wenn es sich um Melaminoberflächen handelt. Diese sind anscheinend besonders prädestiniert dafür, nach dem Anfassen Fingerabdrücke zu zeigen. Die Abzeichnung von Fingerabdrücken führt dazu, dass die Oberflächen häufig gereinigt werden müssen, was keinesfalls gewünscht ist. Man muss allerdings bezüglich von Melaminoberflächen anmerken, dass sie eine sehr hohe mechanische und chemische Beständigkeit besitzen, die ihnen deutliche Vorteile gegenüber thermoplastischen Folien oder Lacken einräumen. Zudem kann durch die Ätzung der Pressbleche, die bei der Herstellung der melaminharzbeschichteten Holzwerkstoffplatten verwendet werden, nahezu jede beliebige Oberflächenausführung hergestellt werden. Wie bereits angemerkt ist die Oberflächengestaltung ein wichtiger Aspekt bei Produkten. Diese ist wie bei fast allen Produkten Modetrends unterworfen. War vor einigen Jahren Hochglanz als Oberflächenausführungen bei vielen Produkten hoch im Kurs stand, ist man nun eher an matten Oberflächen interessiert. Auch bei diesen Oberflächen sind natürlich Fingerabdrücke nach dem Anfassen unerwünscht bzw. werden als Mangel betrachtet.

Der vorliegenden Erfindung liegt daher die technische Aufgabe zu Grunde, Oberflächen zur Verfügung zu stellen, die einen niedrigen Glanzgrad aufweisen und gleichzeitig bezüglich der Sichtbarkeit von Fingerabdrücken deutlich unempfindlich sind. Gleichzeitig soll die Herstellung dieser Produkte in platzsparender und kostengünstiger Weise ermöglicht. Auch sollen hohe Abriebwerte, insbesondere der Abriebklassen AC4 bis AC6 bei gleichzeitig geringem Pressblechverschleiß erreicht werden.

Die gestellte Aufgabe wird erfindungsgemäß durch ein Verfahren mit den Merkmalen des Anspruchs 1 gelöst.

Entsprechend wird ein Verfahren zur Herstellung einer mit einem Dekor versehenen Holzwerkstoffplatte bereitgestellt, wobei das Verfahren die folgenden Schritte umfasst:
- Aufbringen von mindestens einer Schicht aus mindestens einem pulverförmigen Formaldehyd-Harz auf mindestens eine Seite des Trägermaterials;
- Anschmelzen der mindestens einen aufgebrachten Schicht aus dem einen pulverförmigen Harz;
- Auftragen von mindestens einer acrylathaltigen Dispersion auf die angeschmolzene Harzschicht; und
- Trocknen und Härten des Schichtaufbaus.

Es wird demnach ein mehrstufiges Verfahren bereitgestellt, bei dem zunächst ein Formaldehyd-Harzpulver,

z.B. ein Melaminharz-Pulver auf eine Papierlage oder auf eine Holzwerkstoffplatte aufgebracht und angeliert bzw. angeschmolzen wird. Danach wird eine wässrige Acrylatdispersion, z. B. unter Verwendung einer Schlitzdüse, aufgebracht, getrocknet und dann z.B. unter Verwendung eines Excimer-Strahler in der Oberfläche ausgehärtet. Dieses Papierimprägnat oder diese beschichtete Holzwerkstoffplatte kann dann in einer Kurztaktpresse verpresst werden.

Das vorliegende Verfahren bietet verschiedene Vorteile. So kann eine matte Oberfläche mit Glanzpunkten von weniger als 10, bevorzugt von weniger als 8, insbesondere bevorzugt von weniger als 5 erzeugt werden. Die behandelte Oberfläche weist Antifingerprint-Eigenschaften und erfordert einen nur geringen Reinigungsaufwand in Vergleich zu den herkömmlichen Oberflächen.

Zudem wird ein Verfahren zur Herstellung von Holzwerkstoffplatten bereitgestellt, in welchem auf die Verwendung von flüssigem Harz für den Schichtaufbau verzichtet wird und stattdessen Harzpulver zum Einsatz kommt. Durch den Austausch von Harzpulver gegen das typischerweise verwendete Flüssigharz entfällt die für Flüssigoverlays notwendige aufwändige Trocknung, wodurch sich die Anlagenkosten, Abluftproblematik und der Platzbedarf reduzieren. Insgesamt ermöglicht das vorliegende Verfahren eine flexiblere Technologie.

In einer Ausführungsform des vorliegenden Verfahrens ist vorgesehen, dass die Acrylatdispersion strahlenhärtbare acrylathaltige Lacke umfasst. Solche strahlenhärtbaren Lacke können (Meth)acrylate, wie zum Beispiel Polyesther(meth)acrylate, Polyether(meth)acrylate, Epoxy(meth)acrylate oder Urethan(meth)acrylate sein. Es ist auch denkbar, dass das verwendete Acrylat bzw. der acrylathaltige Lack substituierte oder unsubstituierte Monomere, Oligomere und/oder Polymere, insbesondere in Form von Acrylsäure-, Acrylether- und/oder Acrylsäureestermonomeren, Oligomeren oder Polymeren vorliegt. Von Bedeutung für das vorliegende Verfahren ist dabei die definitionsgemäße Präsenz eine Doppelbindung bzw. ungesättigten Gruppe im Acrylat-Molekül. Die Polyacrylate können auch weiterhin funktionalisiert vorliegen. Geeignete funktionelle Gruppen sind unter anderem Hydroxy-, Amino-, Epoxy- und/oder Carboxylgruppen. Wie erwähnt, ermöglichen die genannten Acrylate eine Vernetzung in Gegenwart von UV- bzw. Elektronenstrahlen im Härtungs- bzw. Trocknungsprozess.

Die Menge der aufgetragenen acrylathaltigen Dispersion beträgt zwischen 30 und 50g fl. /m², bevorzugt zwischen 30 und 40 fl. /m². Der Feststoffgehalt der acrylathaltigen Dispersion beträgt zwischen 40 und 60 Gew%, bevorzugt 50 Gew%.

Die mindestens eine acrylathaltige Dispersion wird nach dem Auftrag zunächst getrocknet, z.B. mittels eines IR-Strahlers, und anschließend unter Verwendung eines UV-Strahlers bei Wellenlängen zwischen 120 und 350 nm, bevorzugt zwischen 150 und 250 nm, insbesondere bevorzugt zwischen 170 und 200 nm (z.B. 172 nm), unter Inertgas gehärtet. Dabei wird bevorzugt nicht die gesamte Acrylatschicht ausgehärtet sondern nur eine Schicht von 0,1-0,5 nm. Dies entspricht ca. 1 mg/m.

Mögliche Inertgase sind Stickstoff, Argon, Krypton, Fluor, Xenon, KrCI, ArF, KRF, XeBr, XeCl, XeF, wobei die Verwendung von Stickstoff besonders bevorzugt ist.

In einer weiteren Ausführungsform des vorliegenden Verfahrens liegt das mindestens eine Trägermaterial als Papierlage, bevorzugt Dekorpapierlage oder Overlaypapierlage vor.

In Falle der Verwendung einer Papierlage als Trägermaterial umfasst das vorliegende Verfahren die folgenden Schritte:
- Aufbringen von mindestens einer ersten Schicht aus mindestens einem pulverförmigen Formaldehyd-Harz auf mindestens eine Seite einer Papierlage und Anschmelzen der mindestens einen aufgebrachten Schicht aus einem pulverförmigen Harz;
- Auftragen von mindestens einer acrylathaltigen Dispersion auf die angeschmolzene Harzschicht; und
- Trocknen und Härten des Schichtaufbaus.

Eine auf diese Weise beschichtete Papierlage, z.B. Dekorpapierlage oder Overlaypapierlage, weist einen Glanzgrad von weniger als 10, bevorzugt weniger als 8, insbesondere bevorzugt weniger als 5, und kann mit einer Trägerplatte, z.B. einer Holzwerkstoffplatte wie MDF oder HDF verpresst werden.

In einer anderen Ausführungsform wird als Trägermaterial eine Holzwerkstoffplatte, bevorzugt eine mitteldichte Faser (MDF)-, hochdichte Faser (HDF)- oder Grobspan (OSB)-, eine Sperrholzplatte oder eine Holz-Kunststoff-Komposit-Platte (WPC) verwendet.

In einer weitergehenden Variante umfasst das vorliegende Verfahren daher die folgenden Schritte:
- Aufbringen von mindestens einer ersten Schicht aus mindestens einem pulverförmigen Formaldehyd-Harz auf mindestens eine Seite einer Holzwerkstoffplatte, und Anschmelzen der mindestens einen aufgebrachten Schicht aus einem pulverförmigen Harz;
- Aufbringen von mindestens einer Dekorschicht auf die mindestens eine angeschmolzene Harzschicht mittels eines Direktdruckverfahrens;
- Aufbringen von mindestens einer weiteren, zweiten Schicht aus mindestens einem pulverförmigen Formaldehyd-Harz auf die mindestens eine aufgedruckte Dekorschicht;
- Anschmelzen der mindestens einen auf der Dekorschicht aufgebrachten Schicht aus dem einen pulverförmigen Harz;
- Auftragen von mindestens einer acrylathaltigen Dispersion auf die angeschmolzene Harzschicht; und
- Trocknen und Härten des Schichtaufbaus.

In einer Ausführungsform des vorliegenden Verfahrens wird das pulverförmige Formaldehyd-Harz in einer Menge von 10 bis 100 g/m², bevorzugt 20 bis 80 g/m², insbesondere bevorzugt 25 bis 70 g/m² auf das Trägermaterial aufgetragen. Diese Auftragsmenge an Harzpulver gilt im Wesentlichen für alle aufzutragenden Harzpulverschichten, wobei diese jeweils angepasst werden können. Die Streudichte ist dabei so gewählt, dass in jedem Fall deckende Schichten erzeugt werden. Die Teilchengröße des pulverförmigen Harzes liegt zwischen 20 bis 100 µm, bevorzugt zwischen 40 und 80 µm.

Das aufzutragende pulverförmige Harz ist ein Formaldehydharz, bevorzugt ein Harnstoffharzoder ein Melaminharz, insbesondere bevorzugt ein Melamin-Formaldehyd-Harz. Es ist bevorzugt, wenn für die erste Harzschicht ein Melaminharz oder eine Harnstoffharz verwendet wird. In den oberen Schichten wird bevorzugt nur Melaminharz eingesetzt.

"Anschmelzen" oder "Angelieren" im Sinne der vorliegenden Anmeldung bedeutet, dass die Harzschicht noch nicht vollständig polymerisiert ist, sondern vielmehr wird die Polymerisation auf einer Zwischenstufe gestoppt, in welcher eine weitergehende Vernetzung bzw. Polymerisation zu einem späteren Verarbeitungszeitpunkt noch möglich ist. Der Sinn eines "Angelierens" liegt somit üblicherweise darin begründet, dass man zu einem späteren Zeitpunkt weitere Funktionsschichten auf die bereits aufgetragene Schutzschicht aufbringen oder das Produkt erst in weiteren Verarbeitungsschritten fertigstellen möchte.

Dem Melaminharz-Pulver können auch weitere Substanzen zugegeben werden. Besonders vorteilhaft ist dabei, dass auch wegen z. B. Aussalz-, Andick-, Absetz-, aushärtungsbeeinflussende Effekten usw. schlecht mit flüssigem Melaminharz verträgliche Substanzen verwendet werden können. Dabei kann es sich um Salze zur Erhöhung der Leitfähigkeit, organische oder anorganische Flammschutzmittel, Cellulosederivate, Radikalfänger, Pigmente, UV-Absorber usw.

Entsprechend kann das verwendete pulverförmige Harz Zuschlagstoffe, wie Pigmente, leitfähige Substanzen und Zellulose enthalten.

Bei Zugabe von Farbpigmenten kann die Schicht aus dem angeschmolzenen Harzpulver gleichzeitig als weiße Grundierungsschicht für eine anschließend aufzudruckende Dekorschicht dienen. Als Farbpigmente können weiße Pigmente wie Titandioxid (TiO₂) verwendet werden. Weitere Farbpigmente können Calciumcarbonat, Bariumsulfat oder Bariumcarbonat sein. Der Anteil der Farbpigmente kann bis zu 50 Gew% an der Gesamtpulvermenge betragen.

Die Zugabe von Farbpigmenten zu der ersten Schicht aus Harzpulver erhöht die Deckkraft, so dass diese als (alleinige) Grundlage bzw. Grundierung für die anschließende Dekorschicht einsetzbar sein kann.

Die Menge an Zellulosefasern, die mit dem Harzpulver aufgetragen wird, kann zwischen 0,1 und 1 Gew%, bevorzugt zwischen 0,5 und 0,8 Gew% (bezogen auf die aufzutragende Harzmenge) bzw. zwischen 0,1-0,5 g/m², bevorzugt 0,2-0,4 g/m², insbesondere bevorzugt 0,25 g/m² liegen. Die bevorzugt verwendeten Zellulosefasern sind farblos und liegen in Form eines feinen oder granularen, leicht hygroskopischen Pulvers vor.

Die leitfähigen Substanzen können ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

Die verwendeten Harze enthalten bevorzugt jeweils Additive, wie Härter, Netzmittel (Tenside oder Mischungen davon), Trennmittel und/oder weitere Komponenten.

In einer bevorzugten Ausführungsform wird das Harzpulver mittels elektrostatischer Aufladung aufgetragen. Der Auftrag kann auch mittels Pulverbeschichtung nach dem Triboverfahren erfolgen. Hierbei erfolgt eine Reibungsaufladung des aufzutragenden Pulvers.

Das Anschmelzen der aufgebrachten Schicht aus pulverförmige Harz kann unter Verwendung eines IR-Strahlers, oder auch Mikrowellensysteme oder ähnliches erfolgen. Die Verwendung von IR-Strahlern ist besonders bevorzugt.

In einer Ausführungsvariante kann die Oberfläche des Trägermaterials, insbesondere im Falle einer Holzwerkstoffplatte vor dem Bedrucken zur Verbesserung der Haftung der nachfolgenden Schichten vorbehandelt werden. Dies kann eine Reinigung mit Bürsten, ein Anschliff, der die Oberfläche auch von Unebenheiten befreit, und/oder eine Plasma- oder Coronabehandlung sein.

In einer bevorzugten Ausführungsform wird in einem nächsten Schritt mindestens eine Grundierung auf die (erste) angeschmolzene Harzpulverschicht zur Erhöhung der Deckkraft aufgetragen.

Die Grundierung umfasst bevorzugt Kasein, Maisstärke oder Sojaprotein und kann anorganische Farbpigmente enthalten und somit als Grundierungsschicht für die anschließend aufzudruckende Dekorschicht dienen.

Als Farbpigmente können wiederum weiße Pigmente wie Titandioxid ( TiO₂ ) verwendet werden. Weitere Farbpigmente können Calciumcarbonat, Bariumsulfat oder Bariumcarbonat, aber auch Eisenoxidpigmente (für eine bräunliche Grundierung) sein. Die Grundierung kann neben den Farbpigmenten und dem Kasein, der Maisstärke oder Sojaprotein noch Wasser als Lösemittel enthalten.

Die Menge der aufgetragenen flüssigen Grundierung kann zwischen 10 und 50 g/m², bevorzugt zwischen 15 und 30 g/m², insbesondere bevorzugt zwischen 20 und 25 g/m²liegen.

Es ist ebenfalls denkbar, dass die Grundierung aus mindestens einer, bevorzugt aus mindestens zwei oder mehreren nacheinander aufgetragenen Lagen bzw. Aufträgen besteht (z.B. bis zu fünf Aufträgen), wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze auf das Trägermaterial, z.B. die Holzwerkstofftplatte mit anschließender Trocknung aufgebracht werden. Es ist auch möglich, die Grundierung mittels Digitaldruck auf das Trägermaterial aufzubringen. Die für das digitale Drucken der Grundierung verwendeten Digitaldrucktinten basieren bevorzugt auf UV-Tinten, die mit weißen Farbpigmenten angereichert sind. Es ist aber auch möglich wasserbasierte Digitaldrucktinten oder so genannte Hybridtinten zu verwenden. Ein Auftrag mittels Digitaldruck ist vorteilhaft, da die Druckanlage deutlich kürzer ist als eine Walzvorrichtung und somit Platz, Energie und Kosten spart.

In einer weiteren Ausführungsvariante des vorliegenden Verfahrens wird auf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Bei der Verwendung des indirekten Tiefdrucks werden mehrere Druckwalzen eingesetzt.

In einer besonders bevorzugten Ausführungsform wird das mindestens eine Dekor mittels Digitaldruckverfahren auf das (oberflächenbehandelte und vorbeschichtete) Trägermaterial aufgebracht. Beim Digitaldruck wird das Druckbild direkt von einem Computer in eine Druckmaschine, wie zum Beispiel einen Laserdrucker oder Tintenstrahldrucker, übertragen. Dabei entfällt die Verwendung einer statischen Druckform. Der Dekordruck erfolgt nach dem Inkjet-Prinzip im Single-Pass bei dem die gesamte Breite der zu bedruckenden Oberseite überspannt wird, wobei die Platten unter dem Drucker hindurch bewegt werden. Es ist aber auch möglich, dass die zu bedruckende Trägerplatte unter dem Drucker angehalten wird und dieser die Oberfläche beim Drucken mindestens einmal überfährt.

Die Druckfarben sind in separaten Druckkopfreihen zusammen gefasst, wobei je Farbe eine oder zwei Reihen Druckköpfe vorgesehen sein können. Die Farben der Digitaldrucktinten sind beispielsweise schwarz, blau, rot, rötliches gelb, grünliches gelb, optional kann auch CMYK verwendet werden. Die Digitaldrucktinten basieren optional auf den gleichen Pigmenten, die für analogen und/oder digitalen Druck mit wasserbasierten Tinten verwendet werden. Die Digitaldrucktinten basieren bevorzugt auf UV-Tinten. Es ist aber auch möglich wasserbasierte Digitaldrucktinten oder so genannte Hybridtinten zu verwenden. Nach dem Drucken erfolgt eine Trocknung und/oder Bestrahlung des Dekordrucks.

Die Druckfarben werden in einer Menge zwischen 1 und 30 g/m², bevorzugt zwischen 3 und 20 g/m², insbesondere bevorzugt zwischen 3 und 15 g/m² aufgebracht.

Zusammen mit dem Dekor werden ebenfalls die für die Ausrichtung in der Presse erforderlichen Markierungen aufgedruckt.

Die auf die Dekorschicht aufgetragene und angeschmolzene weitere Pulverharzschicht umfasst Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können dem Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

Es ist möglich, das bedruckte Trägermaterial nach diesem Verfahrensschritt einer Zwischenlagerung zuzuführen. Die aufgebrachte und angeschmolzene Harzpulverschicht dient in diesem Falle als Schutzschicht, die einerseits dem Schutz der bedruckten Oberfläche im Falle der Zwischenlagerung dient und andererseits (aufgrund der noch nicht vollständig ausgehärteten Harzschicht) eine weitere Verarbeitung ermöglicht. Insbesondere bei komplexen Verarbeitungsprozessen ist eine Entkopplung bestimmter Arbeitsschritte aus Gründen von Kosten, Technologie usw. nötig. Es können beispielsweise verkettete Produktionslinien bezüglich ihrer Produktivität stark unterschiedlich sein. Dann müssen zwangsläufig Pufferlager aufgebaut werden, in denen Materialien aufeinander gestapelt werden. Weiter können in einer Produktionslinie Mehrfachdurchläufe nötig sein, weil Auftragsmengen usw. nicht in einem Durchlauf realisierbar sind. In all diesen Fällen sind angetrocknete bzw. angehärtete Oberflächen von Vorteil, da diese einerseits einen Schutz der bedruckten Oberfläche im Falle einer Zwischenlagerung und andererseits eine weitere Verarbeitung ermöglichen.

In einer weitergehenden Ausführungsform werden auf die Dekorschicht oder die auf die Dekorschicht aufgebrachte Harzpulverschicht abriebfeste Partikel gleichmäßig aufgestreut.

Als abriebfeste Partikel können Partikel aus Korund (Aluminiumoxide), Borcarbide, Siliziumdioxide, Siliziumcarbide verwendet werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 7 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klassen F180-220 verwendet.

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane.

In einer weitergehenden Ausführungsform des vorliegenden Verfahrens wird mindestens eine dritte Schicht aus mindestens einem pulverförmigen Harz, insbesondere auf die Schicht aus abriebfesten Partikeln, aufgebracht. Diese Schicht dient als Trennschicht zur Absperrung der abriebfesten Partikel.

Die in diesen Schritt, insbesondere auf die abriebfesten Partikel aufgetragene und angeschmolzene Pulverharzschicht umfasst Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können den Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

In einer weitergehenden Ausführungsform des vorliegenden Verfahrens werden, insbesondere auf die mindestens eine dritte angeschmolzene Harzpulverschicht, Glaskugeln aufgestreut. Die Glaskugeln dienen als Abstandshalter zwischen abriebfesten Partikeln und nachfolgenden Pressblech fungieren. Damit kann der Blechverschleiß zumindest teilweise reduziert werden.

Die bevorzugt verwendeten Glaskugeln weisen einen Durchmesser von 60 - 120 µm, bevorzugt 80-90 µm auf. Der Durchmesser der Glaskugeln ist auf die durchschnittliche Partikelgröße der verwendeten abriebfesten Partikel abgestimmt, um eine optimale Absperrung zum nachfolgenden Pressblech zu gewährleisten. So werden im Falle von Korund F220 Glaskugeln mit einem Durchmesser zwischen 70-90 µm verwendet, und im Falle von Korund F180 Glaskugeln mit einem Durchmesser zwischen 80-120 µm verwendet.

Die Menge an Glaskugeln beträgt 5 bis 30 g/m², bevorzugt 8 bis 20 g/m², insbesondere bevorzugt 8 bis 15 g/m².

Die Glaskugeln können ebenfalls in silanisierter Form vorliegen. Durch die Silanisierung der Glaskugeln wird die Einbettung der Glasperlen in die Harzmatrix verbessert.

In einer weitergehenden Ausführungsform des vorliegenden Verfahrens wird mindestens eine weitere, z.B. vierte Schicht aus mindestens einem pulverförmigen Harz, insbesondere auf die Schicht aus Glaskugeln, aufgebracht. Diese Schicht dient zur Absperrung der Glaskugeln und als Abschlussschicht.

Die in diesen Schritt, insbesondere auf die Glaskugeln, Schrittaufgetragene und angeschmolzene weitere, vierte Pulverharzschicht umfasst Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können den Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

In einer weiteren Ausführungsform des vorliegenden Verfahrens wird der Schichtaufbau in einer Kurztaktpresse (KT-Presse) verpresst. Der Pressschritt erfolgt unter Druck- und Temperatureinfluss bei Temperaturen zwischen 180 und 250°C, bevorzugt zwischen 200 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 8 und 30 sec, bevorzugt zwischen 10 und 25 sec.

Bevorzugt wird das beschichtete Trägermaterial, wie die beschichtete Holzwerkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird. Dies ermöglicht die Herstellung einer dekorsynchronen Struktur. Während des Verpressens kommt es zu einer Aufschmelzung der Melaminharzschichten und Ausbildung eines Laminats durch Kondensationsreaktion unter Einschluss der Bestandteile Korund/Glas/Fasern.

Auf die Unterseite der Holzwerkstoffplatte kann ein Gegenzug, z.B. aus mehreren Harzschichten ohne Zuschlagstoffe oder ein Gegenzugpapier, aufgetragen werden. Hierdurch wird gewährleistet, dass die durch die aufgebrachten Schichten beim Verpressen entstehenden Zugkräfte auf die Holzwerkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge jedoch ohne die Zugabe der Zuschlagstoffe abriebfesten Partikel oder Glaskugeln. Es kann auch ein Imprägnat als Gegenzug verwendet werden.

In einer bevorzugten ersten Ausführungsvariante umfasst das vorliegende Verfahren die folgenden Schritte:
- Aufbringen von mindestens einer ersten Schicht aus mindestens einem pulverförmigen Formaldehyd-Harz auf mindestens eine Seite einer Holzwerkstoffplatte und Anschmelzen der mindestens einen aufgebrachten Schicht aus einem pulverförmigen Harz;
- Aufbringen von mindestens einer Grundierung auf die erste angeschmolzene Harzpulverschicht;
- Aufbringen von mindestens einer Primerschicht auf die mindestens eine Grundierung;
- Aufbringen von mindestens einer Dekorschicht mittels eines Direktdruckverfahrens;
- Aufstreuen von abriebfesten Partikeln;
- Aufbringen von mindestens einer weiteren Schicht aus mindestens einem pulverförmigen Formaldehyd-Harz auf die mindestens eine Schicht aus abriebfesten Partikeln und Anschmelzen der aufgebrachten Schicht aus einem pulverförmigen Harz;
- Auftragen, Trocknen und Härten von mindestens einer acrylathaltigen Dispersion auf die angeschmolzenen Harzschicht; und
- Verpressen des Schichtaufbaus.

In einer bevorzugten weiteren Ausführungsvariante umfasst das vorliegende Verfahren die folgenden Schritte:
- Aufbringen von mindestens einer ersten Schicht aus mindestens einem pulverförmigen Formaldehyd-Harz auf mindestens eine Seite einer Holzwerkstoffplatte und Anschmelzen der mindestens einen aufgebrachten Schicht aus einem pulverförmigen Harz;
- Aufbringen von mindestens einer Grundierung auf die erste angeschmolzene Harzpulverschicht;
- Aufbringen von mindestens einer Primerschicht auf die mindestens eine Grundierung;
- Aufbringen von mindestens einer Dekorschicht mittels eines Direktdruckverfahrens;
- Aufbringen von mindestens einer zweiten Schicht aus mindestens einem pulverförmigen Formaldehyd-Harz auf die mindestens eine aufgedruckte Dekorschicht und Anschmelzen der mindestens einen auf die Dekorschicht aufgebrachten zweiten Schicht aus pulverförmigen Harz;
- Aufstreuen von abriebfesten Partikeln;
- Aufbringen von mindestens einer weiteren, dritten Schicht aus mindestens einem pulverförmigen Formaldehyd-Harz auf die mindestens eine Schicht aus abriebfesten Partikeln und Anschmelzen der aufgebrachten dritten Schicht aus pulverförmigen Harz;
- Aufstreuen von Glaskugeln auf die mindestens eine dritte angeschmolzene Harzpulverschicht;
- Aufbringen von mindestens einer weiteren, vierten Schicht aus mindestens einem pulverförmigen Formaldehyd-Harz auf die Schicht aus Glaskugeln und Anschmelzen der aufgebrachten vierten Schicht aus pulverförmigen Harz;
- Auftragen, Trocknen und Härten von mindestens einer acrylathaltigen Dispersion auf die angeschmolzenen Harzschicht; und
- Verpressen des Schichtaufbaus.

Das vorliegende Verfahren ermöglicht somit die Herstellung einer verschleißfesten mit einer Dekorschicht versehenen und mattierten Holzwerkstoffplatte mit einem Harzaufbau mit abriebfesten Partikeln. Die vorliegende Holzwerkstoffplatte weist einen Glanzgrad von weniger als 10, bevorzugt weniger als 8, insbesondere bevorzugt weniger als 5, z.B. von 3,4 oder 3,8 Glanzpunkten auf.

Die Holzwerkstoffplatte umfasst mindestens eine Dekorschicht auf der Oberseite und einen mehrschichtigen Harzaufbau enthaltend abriebfeste Partikel, optional Zellulosefasern und Glaskugeln, wobei der mehrschichtige Harzaufbau eine Gesamtschichtdicke zwischen 60 und 200 µm, bevorzugt zwischen 90 und 150 µm, insbesondere bevorzugt zwischen 100 und 120 µm aufweist.

In einer Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Formaldehyd-Harzpulver - Druckdekorschicht - zweite Harzschicht aus angeschmolzenem Formaldehyd-Harzpulver (Schutzschicht) - ausgehärtete Acrylatschicht.

In einer weiteren Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Formaldehyd-Harzpulver - Grundierungsschicht - Primerschicht - Druckdekorschicht - Schicht aus abriebfesten Partikeln - zweite Harzschicht aus angeschmolzenem Formaldehyd-Harzpulver (Schutzschicht) - ausgehärtete Acrylatschicht.

In einer noch weiteren Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Formaldehyd-Harzpulver - Grundierungsschicht - Primerschicht - Druckdekorschicht - zweite Harzschicht aus angeschmolzenem Formaldehyd-Harzpulver (Schutzschicht) - Schicht aus abriebfesten Partikeln- dritte Harzschicht aus angeschmolzenem Formaldehyd-Harzpulver (Trennschicht) - Glaskugeln (Abstandshalter) - vierte Harzschicht aus angeschmolzenem Formaldehyd-Harzpulver - ausgehärtete Acrylatschicht.

Die Schutzschicht dient der Abdeckung des Dekors und des Schutzes des Dekors während der Zwischenlagerung (Stapelung, Lagerung, Transport). Die weiteren Harzschichten auf der

Oberseite bilden in Summe ein Overlay, das das fertige Laminat gegen Abrieb schützt und eine dekorsynchrone Strukturierung ermöglicht.

Die Produktionslinie zur Durchführung des vorliegenden Verfahrens umfasst folgende Elemente:
- mindestens eine Auftragsvorrichtung zum Auftragen einer Harzpulverschicht, die Fasern enthalten kann, auf die Oberseite des Trägermaterials;
- mindestens eine Vorrichtung zum Anschmelzen der ersten Harzpulverschicht, insbesondere ein IR-Strahler;
- mindestens eine Auftragsvorrichtung zum Auftragen von mindestens einer acrylathaltigen Dispersion auf die angeschmolzene Harzschicht, und
- mindestens eine Vorrichtung zum Härten der acrylathaltigen Schicht, insbesondere ein UV-Strahler.

In einer Ausführungsform umfasst die vorliegende Produktionslinie folgende Elemente:
- mindestens eine Auftragsvorrichtung zum Auftragen einer ersten Harzpulverschicht, die Fasern enthalten kann, auf die Oberseite einer Holzwerkstoffplatte als Trägermaterial und mindestens eine Vorrichtung zum Anschmelzen der ersten Harzpulverschicht, insbesondere ein IR-Strahler;
- opt. mindestens eine Auftragsvorrichtung zum Auftragen von mindestens einer Grundierungsschicht;
- opt. mindestens eine Auftragsvorrichtung zum Auftragen von mindestens einer Primerschicht;
- mindestens eine Druckvorrichtung,
- opt. mindestens eine Auftragsvorrichtung zum Auftragen einer weiteren Harzpulverschicht und mindestens eine Vorrichtung zum Anschmelzen der Harzpulverschicht, insbesondere ein IR-Strahler;,
- opt. mindestens eine Vorrichtung zum Aufstreuen einer vorbestimmten Menge an abriebfesten Partikeln;
- opt. mindestens eine Auftragsvorrichtung zum Auftragen einer weiteren Harzpulverschicht und mindestens eine Vorrichtung zum Anschmelzen der Harzpulverschicht, insbesondere ein IR-Strahler;
- opt. mindestens eine Vorrichtung zum Aufstreuen einer vorbestimmten Menge an Glaskugeln;
- opt mindestens eine Auftragsvorrichtung zum Auftragen einer weiteren Harzpulverschicht und mindestens eine Vorrichtung zum Anschmelzen der ersten Harzpulverschicht, insbesondere ein IR-Strahler;
- mindestens eine Auftragsvorrichtung zum Auftragen von mindestens einer acrylathaltigen Dispersion auf die angeschmolzene Harzschicht, und mindestens eine Vorrichtung zum Trocknen und Härten der acrylathaltigen Schicht, insbesondere ein UV-Strahler, und
- opt. mindestens eine Kurztaktpresse.

Als in der vorliegenden Produktionslinie vorgesehene Vorrichtungen zum Auftragen der Harzpulverschichten können Tribopistolen verwendet werden.

Die in der vorliegenden Produktionslinie vorgesehenen Streuvorrichtungen für die abriebfesten Partikel und Glaskugeln ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

In einer Ausführungsform der vorliegenden Produktionslinie ist zudem vorgesehen, dass die mindestens eine Streuvorrichtung von mindestens einer Kabine, die mit mindestens einem Mittel zum Entfernen von in der Kabine auftretenden Stäuben versehen ist, umgeben ist bzw. in dieser angeordnet ist. Das Mittel zum Entfernen der Stäube kann in Form einer Absaugvorrichtung oder auch als Vorrichtung zum Einblasen von Luft ausgebildet sein. Das Einblasen von Luft kann über Düsen erreicht werden, die am Plattenein- und auslauf installiert sind und Luft in die Kabine einblasen. Zusätzlich können diese verhindern, dass durch Luftbewegungen ein inhomogener Streuvorhang an abriebfesten Material entsteht.

Die Entfernung des Staubes aus abriebfesten Material aus der Umgebung der Streuvorrichtung ist vorteilhaft, da neben der offensichtlich gesundheitlichen Belastung für die an der Produktionslinie tätigen Arbeiter der Feinstaub aus abriebfesten Partikeln sich auch auf anderen Anlagenteilen der Produktionslinie ablegt und zu erhöhten Verschleiß der selbigen führt. Die Anordnung der Streuvorrichtung in einer Kabine dient daher nicht nur der Reduzierung der gesundheitlichen Staubbelastung der Umgebung der Produktionslinie, sondern beugt auch einem vorzeitigen Verschleiß vor.

Die Streuvorrichtung wird bevorzugter Weise durch eine Lichtschranke gesteuert, wobei die Lichtschranke in Verarbeitungsrichtung vor der unterhalb der Streuvorrichtung vorgesehenen Walze (Streuwalze) angeordnet ist. Die Steuerung der Streuvorrichtung durch eine Lichtschranke ist sinnvoll, das sich zwischen den einzelnen Holzwerkstoffplatten mehr oder weniger große Lücken befinden, Diese startet den Streuprozess sobald sich eine Platte vor der Streuwalze befindet.

In einer Ausführungsform der vorliegenden Streuvorrichtung ist vor der Streuwalze mindestens ein Trichter zum Auffangen von überschüssigen abriebfesten Partikeln (d.h. nicht auf der mindestens einen Holzwerkstoffplatte aufgestreuten, sondern vielmehr vor dem Einfahren der Holzwerkstoffplatte mit Hilfe der Transportvorrichtung unter die Streuwalze vor derselbigen herunterfallende abriebfeste Partikel) vorgesehen.

In einer weitergehenden Variante ist der Trichter mit mindestens einer Fördereinrichtung und einer Siebvorrichtung gekoppelt, wobei das in dem Trichter aufgefangene überschüssige abriebfeste Material über die Fördereinrichtung zu der Siebvorrichtung transportiert wird. Die Siebmaschen der Siebvorrichtung entsprechen dem größten verwendeten Korn des abriebfesten Partikelmaterials (d.h. ca. 80-100 µm). In der Siebvorrichtung werden Schmutzpartikel und verklumptes Material (wie verklumptes Harz oder verklumptes abriebfestes Material) von dem aufgefangenen abriebfesten Material abgetrennt und das gesiebte abriebfeste Material kann in die Streuvorrichtung zurückgeführt (recycelt) werden.

Wie oben bereits erläutert, ist auch vorgesehen, den Härter gezielt an den korrespondierenden Auftragswerken bzw. Auftragsvorrichtungen für die verschiedenen Harzschichten dem flüssigen Harz zuzumischen. In einer Ausführungsform der vorliegenden Produktionslinie ist hierfür mindestens eine Dosieranlage für die Zugabe des Härters an jeder Auftragsvorrichtung vorgesehen. Der Härter wird von der mindestens einen Dosieranlage in den Vorlagenbehälter für das Harz gepumpt und in dem Vorlagenbehälter mit dem Harz z.B. mittels eines geeigneten Rührwerkes vermischt

Die Erfindung wird nachfolgend unter Bezugnahme auf mehrere Ausführungsbeispiele näher erläutert.

### Ausführungsbeispiel 1:

In einer Produktionslinie, die mit einem Vorschub von 25 m/min betrieben wird, wird von einer Rolle Dekorpapier (Grammatur: 80 g/m²) abgewickelt. In einer Auftragsvorrichtung wird das Dekorpapier dann oberseitig mit Hilfe von Tribopistolen mit Melaminharz-Pulver in einer Menge von 70 g/m² beschichtet. Im Melaminharz-Pulver waren die üblichen Hilfsstoffe wie Härter, Trennmittel usw. enthalten. Danach wird das Pulver durch Infrarotstrahlung angeschmolzen.

Auf die Oberseite wird dann mit einer Schlitzdüse eine Acrylatdispersion in einer Menge von 30 g fl. /m² aufgetragen (Feststoffgehalt: ca. 50 Gew%). Die Dispersion wird mit Hilfe von IR-Strahlern getrocknet. Danach wird die Oberfläche mit Hilfe eines Excimerstrahlers (172 nm) unter Inertgas ( Stickstoff ) gehärtet.

Danach wird das Imprägnat oberseitig auf einem Träger in einer Kurztakt-Presse verpresst. Rückseitig wurde ein Dekorimprägnat ohne Acrylatbeschichtung eingesetzt. Als Träger wurde eine 19 mm Spanplatte verwendet. Die Pressbedingungen waren: T=200°C, p= 40 kg/cm² und t= 16 sec. Es wurde ein Pressblech mit einer Büttenstruktur verwendet.

Nach der Verpressung wurde eine Glanzgradbestimmung (DIN EN ISO 2813:2015-02, Messwinkel: 85°) durchgeführt, wobei sich ein Wert von 3,8 Glanzpunkten ergab.

Ein Imprägnat, das ohne Acrylatbeschichtung imprägniert worden war, lieferte einen Wert von 12,3 Glanzpunkten bei der Glanzgradbestimmung.

Auf die Oberfläche sowie die Referenzfläche wurden von einer Testperson - soweit möglich - mehrere Fingerabdrücke aufgebracht. Dies war im Gegensatz zur Referenzfläche auf der Oberfläche mit der Testrezeptur nicht möglich.

### Ausführungsbeispiel 2:

In einer Produktionslinie, die mit einem Vorschub von 25 m/min betrieben wird, wird von einer Rolle Overlaypapier (Grammatur: 30 g/m²) abgewickelt. In einem Streuer werden 20 g Korund/m² (F230, FEPA-Standard) aufgestreut. In einer Auftragsvorrichtung wird das Overlaypapier dann oberseitig mit Hilfe von Tribopistolen mit Melaminharz-Pulver in einer Menge von 20 g/m² beschichtet. Im Melaminharz-Pulver waren die üblichen Hilfsstoffe wie Härter, Trennmittel usw. enthalten. Danach wird das Pulver durch Infrarotstrahlung angeschmolzen.

Anschließend wird auf der Rückseite ebenfalls mit einer Auftragsvorrichtung, die wiederum mit Tribopistolen arbeitet, Melaminharz-Pulver in einer Menge von 80 g/m² aufgetragen und mit IR-Strahlern angeliert. Im Melaminharz-Pulver waren die üblichen Hilfsstoffe wie Härter, Trennmittel usw. enthalten.

Auf dieses Melaminharz (auf der Unterseite wird dann mit einer Schlitzdüse eine Acrylatdispersion in einer Menge von 30 g fl. /m² aufgetragen (Feststoffgehalt: ca. 50 Gew%). Die Dispersion wird mit Hilfe von IR-Strahlern getrocknet. Danach wird die Oberfläche mit Hilfe eines Excimerstrahlers (172 nm ) unter Inertgas gehärtet.

Danach wird das Overlayimprägnat mit der Acrylatbeschichtung nach oben in einer KurztaktPresse auf einem Dekorimprägnat auf der Oberseite und einem Gegenzug auf der Unterseite auf eine 7 mm HDF aufpresst. Die Pressbedingungen waren: T=200°C, p= 40 kg/cm² und t= 16 sec. Es wurde ein Pressblech mit einer Büttenstruktur verwendet.

Nach der Verpressung wurde eine Glanzgradbestimmung (DIN EN ISO 2813:2015-02, Messwinkel: 85°) durchgeführt, wobei sich ein Wert von 3,8 Glanzpunkten ergab. Als Referenz wurde eine Verpressung mit eienm Overlayimprägnat, das ohne Acrylatbeschichtung hergestellt worden war, lieferte einen Wert von 12,3 Glanzpunkten bei der Glanzgradbestimmung.

Auf die Oberfläche sowie die Referenzfläche wurden von einer Testperson -soweit möglich - mehrere Fingerabdrücke aufgebracht. Dies war im Gegensatz zur Referenzfläche auf der Oberfläche mit der Testrezeptur nicht möglich.

Bei der Prüfung des Verhaltens gegenüber Abriebbeanspruchung gemäß der DIN EN 13329, 2016-08 ergab eine Beanspruchungsklasse 32.

### Ausführungsbeispiel 3:

In einer Produktionslinie werden 8 mm HDF vereinzelt, mit Hilfe von Bürsten von Staub befreit und denn über Rollentransporte weitertransportiert ( Anlagenvorschub: 30 m/min). In einer Auftragsvorrichtung werden sie dann mit Hilfe von Tribopistolen mit Melaminharz-Pulver in einer Menge von 25 g/m² beschichtet. Im Melaminharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung( Umluft) beschichtet. Bei der Farbgrundierung handelt es sich um ein Gemisch aus Kasein und Pigment ( Titandioxid ). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung. Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet. Auf den Druck wird mit einer Streuvorrichtung Korund aufgestreut (Auftragsmenge: 20 g Korund/m², F 230 FEPA-Standard). Danach wird wiederum mit einer Tribopistole Melaminharz-Pulver aufgetragen (Auftragsmenge: 60 g/m²). Im Melaminharz-Pulver waren die üblichen Hilfsstoffe wie Härter, Trennmittel usw. enthalten. Dieses Melaminharz-Pulver wird wieder mit Hilfe eines IR-Strahlers angeliert. Im Melaminharzpulver waren die üblichen Hilfsstoffe wie Härter, Trennmittel usw. enthalten.

Auf dieses Melaminharz wird dann mit einer Schlitzdüse eine Acrylatdispersion in einer Menge von 50 g fl. /m² aufgetragen (Feststoffgehalt: ca. 50 Gew%). Die Dispersion wird mit Hilfe von IR-Strahlern getrocknet. Danach wird die Oberfläche mit Hilfe eines Excimerstrahlers (172 nm) unter Inertgas gehärtet.

Danach wird die Platte in einer KT-Presse zusammen mit einem Gegenzugimprägnat verpresst. Die Pressbedingungen waren: T=200°C, p= 40 kg/cm² und t= 12 sec. Es wurde ein Pressblech mit einer Büttenstruktur verwendet. Nach der Verpressung wurde eine Glanzgradbestimmung (DIN EN ISO 2813:2015-02, Messwinkel: 85°) durchgeführt, wobei sich ein Wert von 3,4 Glanzpunkten ergab. Ein Referenzmuster, das ohne Acrylatbeschichtung hergestellt worden war, lieferte einen Wert von 12,9 Glanzpunkten bei der Glanzgradbestimmung.

Auf die Oberfläche sowie die Referenzfläche wurden von einer Testperson - soweit möglich - mehrere Fingerabdrücke aufgebracht. Dies war im Gegensatz zur Referenzfläche auf der Oberfläche mit der Testrezeptur nicht möglich.

Die anschließend durchgeführte Prüfung bezüglich des Verhaltens gegenüber Abriebbeanspruchung gemäß der DIN EN 15468 - August 2018 lieferte als Ergebnis die Beanspruchungsklasse 32.

### Ausführungsbeispiel 4:

In einer Produktionslinie werden 8 mm HDF vereinzelt, mit Hilfe von Bürsten von Staub befreit und denn über Rollentransporte weitertransportiert (Vorschub: 30 m/min). In einer Auftragsvorrichtung werden sie dann mit Hilfe von Tribopistolen mit Melaminharz-Pulver in einer Menge von 25 g/m² beschichtet. Im Melaminharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung( Umluft) beschichtet. Bei der Farbgrundierung handelt es sich um ein Gemisch aus Kasein und Pigment ( Titandioxid ). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m² mit Umlufttrocknung. Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet. Danach wird wiederum mit einer Tribopistole Melaminharz-Pulver aufgetragen (Auftragsmenge: 30 g/m²). Im Melaminharz-Pulver waren die üblichen Hilfsstoffe wie Härter, Trennmittel usw. enthalten Dieses Melaminharz-Pulver wird wieder mit Hilfe eines IR-Strahlers angeliert. Auf den Druck wird mit einer Streuvorrichtung Korund aufgestreut (Auftragsmenge: 20 g Korund/m², F 230; FEPA-Standard). Danach wird wiederum mit einer Tribopistole Melaminharzpulver aufgetragen (Auftragsmenge: 50 g/m²). In dem Melaminharz-Pulver waren ca. 5 Gew% Cellulose ( Fa. J. Rettenmaier & Söhne, Vivapur 302 ) enthalten. Im Melaminharz-Pulver waren die üblichen Hilfsstoffe wie Härter, Trennmittel usw. enthalten Dieses Melaminharz-Harzpulver wird wieder mit Hilfe eines IR-Strahlers angeliert. Im Melaminharzpulver waren die üblichen Hilfsstoffe wie Härter, Trennmittel usw. enthalten. Dann wurden mit einer Streuvorrichtung Glaskugeln in einer Menge von ca. 8 g / m² (Fa. Potters, GP 065-90) aufgestreut. Es erfolgt ein erneuter Auftrag von Melaminharz-Pulver mit Hilfe von Tribopistolen (Auftragsmenge: 40 g /m²). Auch hier sind im Melaminharz-Pulver die üblichen Hilfsstoffe enthalten. Das Harz wird wieder mit Hilfe eines IR-Strahlers angeliert.

Auf dieses Melaminharz wird dann mit einer Schlitzdüse eine Acrylatdispersion in einer Menge von 40 g fl. /m² aufgetragen (Feststoffgehalt: ca. 50 Gew%). Die Dispersion wird mit Hilfe von IR-Strahlern getrocknet. Danach wird die Oberfläche mit Hilfe eines Excimerstrahlers (172 nm) unter Inertgas gehärtet.

Danach wird die Platte in einer KT-Presse zusammen mit einem Gegenzugimprägnat verpresst. Die Pressbedingungen waren: T=200°C, p= 40 kg/cm² und t= 15 sec. Es wurde ein Pressblech mit einer Büttenstruktur verwendet. Nach der Verpressung wurde eine Glanzgradbestimmung (DIN EN ISO 2813:2015-02, Messwinkel: 85°) durchgeführt, wobei sich ein Wert von 3,8 Glanzpunkten ergab. Eine Platte, die ohne Acrylatbeschichtung hergestellt worden war, lieferte einen Wert von 12,0 Glanzpunkten bei der Glanzgradbestimmung.

Auf die Oberfläche sowie die Referenzfläche wurden von einer Testperson -soweit möglich - mehrere Fingerabdrücke aufgebracht. Dies war im Gegensatz zur Referenzfläche auf der Oberfläche mit der Testrezeptur nicht möglich.

Die anschließend durchgeführte Prüfung bezüglich des Verhaltens gegenüber Abriebbeanspruchung gemäß der DIN EN 15468 - August 2018 lieferte als Ergebnis die Beanspruchungsklasse 32.

### Ausführungsbeispiel 5:

In einer Produktionslinie werden 8 mm HDF vereinzelt, mit Hilfe von Bürsten von Staub befreit und denn über Rollentransporte weitertransportiert ( Anlagenvorschub: 30 m/min ). In einer Auftragsvorrichtung werden sie dann mit Hilfe von Tribopistolen mit Melaminharz-Pulver in einer Menge von 25 g/m² beschichtet. Im Melaminharz-Pulver waren die üblichen Hilfsstoffe wie Härter, Trennmittel usw. enthalten. Zusätzlich enthielt das Harz 3 Gew% Kohlenstoff-Nanotubes. Danach wird das Pulver durch Infrarotstrahlung angeschmolzen.

Danach wird die grundierte Platte im Mehrfachauftrag mit einer Farbgrundierung mit anschließender Zwischentrocknung( Umluft) beschichtet. Bei der Farbgrundierung handelt es sich um ein Gemisch aus Kasein und Pigment ( Titandioxid ). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung. Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet. Danach wird wiederum mit einer Tribopistole Melaminharz-Pulver aufgetragen (Auftragsmenge: 30 g/m²). Im Melaminharz-Pulver waren die üblichen Hilfsstoffe wie Härter, Trennmittel usw. enthalten. Dieses Melaminharz-Pulver wird wieder mit Hilfe eines IR-Strahlers angeliert. Auf den Druck wird mit einer Streuvorrichtung Korund aufgestreut (Auftragsmenge: 20 g Korund/m², F 230). Danach wird wiederum mit einer Tribopistole Melaminharzpulver aufgetragen (Auftragsmenge: 50 g/m²). In dem Melaminharz-Pulver waren ca. 5 Gew% Cellulose ( Fa. J. Rettenmaier & Söhne, Vivapur 302 ) enthalten. Dieses Melaminharzpulver wird wieder mit Hilfe eines IR-Strahlers angeliert. Im Melaminharzpulver waren die üblichen Hilfsstoffe wie Härter, Trennmittel usw. enthalten. Dann wurden mit einer Streuvorrichtung Glaskugeln in einer Menge von ca. 8 g / m² (Fa. Potters, GP 065-90) aufgestreut. Es erfolgt ein erneuter Auftrag von Melaminharz-Pulver mit Hilfe von Tribopistolen (Auftragsmenge: 40 g /m² ). Auch hier sind im Melaminharz-Pulver die üblichen Hilfsstoffe enthalten. Das Harz wird wieder mit Hilfe eines IR-Strahlers angeliert.

Auf dieses Melaminharz wird dann mit einer Schlitzdüse eine Acrylatdispersion in einer Menge von 40 g fl. /m² aufgetragen (Feststoffgehalt: ca. 50 Gew%). Die Dispersion wird mit Hilfe von IR-Strahlern getrocknet. Danach wird die Oberfläche mit Hilfe eines Excimerstrahlers (172 nm) unter Inertgas gehärtet.

Danach wird die Platte in einer KT-Presse zusammen mit einem Gegenzugimprägnat verpresst. Die Pressbedingungen waren: T=200°C, p= 40 kg/cm² und t= 15 sec. Es wurde ein Pressblech mit einer Büttenstruktur verwendet. Nach der Verpressung wurde eine Glanzgradbestimmung (DIN EN ISO 2813:2015-02, Messwinkel: 85°) durchgeführt, wobei sich ein Wert von 3,8 Glanzpunkten ergab. Eine Platte, die ohne Acrylatbeschichtung hergestellt worden war, lieferte einen Wert von 12,0 Glanzpunkten bei der Glanzgradbestimmung.

Auf die Oberfläche sowie die Referenzfläche wurden von einer Testperson -soweit möglich - mehrere Fingerabdrücke aufgebracht. Dies war im Gegensatz zur Referenzfläche auf der Oberfläche mit der Testrezeptur nicht möglich.

Die anschließend durchgeführte Prüfung bezüglich des Verhaltens gegenüber Abriebbeanspruchung gemäß der DIN EN 15468 - August 2018 lieferte als Ergebnis die Beanspruchungsklasse 32. Eine Messung des Oberflächenwiderstandes ergab einen Wert von 7,8 ×10⁸ Ω.

## Patentansprüche

1. Verfahren zur Herstellung eines mit mindestens eines mattierten mit einer Anti-Fingerprint-Beschichtung versehenen Trägermaterials, wobei das Trägermaterial eine Papierlage oder eine Holzwerkstoffplatte ist, umfassend die Schritte:
- Aufbringen von mindestens einer Schicht aus mindestens einem pulverförmigen Formaldehyd-Harz auf mindestens eine Seite des Trägermaterials;
- Anschmelzen der mindestens einen aufgebrachten Schicht aus dem einen pulverförmigen Formaldehyd-Harz;
- Auftragen von mindestens einer acrylathaltigen Dispersion auf die angeschmolzene Formaldehyd-Harzschicht; und
- Trocknen und Härten des Schichtaufbaus.

2. Verfahren nach Anspruch 1, **dadurch gekennzeichnet, dass** die Papierlage eine Dekorpapierlage oder eine Overlaypapierlage ist.

3. Verfahren nach Anspruch 1, **dadurch gekennzeichnet, dass** die Holzwerkstoffplatte eine mitteldichte Faser (MDF)-, hochdichte Faser (HDF)- oder Grobspan (OSB)-, eine Sperrholzplatte oder eine Holz-Kunststoff-Komposit-Platte (WPC) ist.

4. Verfahren nach einem der vorhergehenden Ansprüche, **dadurch gekennzeichnet, dass** das pulverförmige Formaldehyd-Harz, insbesondere ein Harnstoffharz, ein Melaminharz oder ein Phenolharz, insbesondere bevorzugt ein Melamin-Formaldehyd-Harz, mittels elektrostatischer Aufladung auf das Trägermaterial aufgetragen wird.

5. Verfahren nach einem der vorhergehende Ansprüche, **gekennzeichnet durch** die folgenden Schritte:
- Aufbringen von mindestens einer ersten Schicht aus mindestens einem pulverförmigen Formaldehyd-Harz auf mindestens eine Seite des Trägermaterials und Anschmelzen der mindestens einen aufgebrachten Schicht aus einem pulverförmigen Harz;
- Aufbringen von mindestens einer Dekorschicht auf die mindestens eine angeschmolzene Formaldehyd-Harzschicht mittels eines Direktdruckverfahrens;
- Aufbringen von mindestens einer weiteren, zweiten Schicht aus mindestens einem pulverförmigen Formaldehyd-Harz auf die mindestens eine aufgedruckte Dekorschicht;
- Anschmelzen der mindestens einen auf der Dekorschicht aufgebrachten zweiten Schicht aus dem einen pulverförmigen Formaldehyd-Harz:
- Auftragen von mindestens einer acrylathaltigen Dispersion auf die angeschmolzene Formaldehyd-Harzschicht; und
- Trocknen und Härten des Schichtaufbaus.

6. Verfahren nach Anspruch 5, **dadurch gekennzeichnet, dass** vor dem Bedrucken auf die angeschmolzene Formaldehyd-Harzpulverschicht mindestens eine Grundierung, insbesondere umfassend Kasein, Maisstärke oder Sojaprotein, aufgebracht wird.

7. Verfahren nach Anspruch 5 oder 6, **dadurch gekennzeichnet, dass** vor dem Bedrucken, insbesondere auf die mindestens eine Grundierung, mindestens eine Primerschicht aufgebracht wird.

8. Verfahren nach einem der Ansprüche 5-7, **dadurch gekennzeichnet, dass** gleichmäßig abriebfeste Partikel auf die Dekorschicht oder auf die angeschmolzenen Formaldehyd-Harzpulverschichten aufgestreut werden.

9. Verfahren nach einem der Ansprüche 5-8, **dadurch gekennzeichnet, dass** mindestens eine weitere, dritte Schicht aus mindestens einem pulverförmigen Formaldehyd-Harz insbesondere auf die Schicht aus abriebfesten Partikeln, aufgebracht wird.

10. Verfahren nach Anspruch 9, **dadurch gekennzeichnet, dass** Glaskugeln, insbesondere auf die mindestens eine weitere, dritte angeschmolzene Formaldehyd-Harzpulverschicht, aufgestreut werden.

11. Verfahren nach einem der Ansprüche 9-10, **dadurch gekennzeichnet, dass** mindestens eine weitere, vierte Schicht aus mindestens einem pulverförmigen Formaldehyd-Harz, insbesondere auf die Schicht aus Glaskugeln, aufgebracht wird.

12. Verfahren nach einem der vorhergehenden Ansprüche, **dadurch gekennzeichnet, dass** die mindestens eine acrylathaltige Dispersion einen strahlenhärtbaren acrylathaltigen Lack, insbesondere ausgewählt aus Polyesther(meth)acrylate, Polyether(meth)acrylate, Epoxy(meth)acrylate oder Urethan(meth)acrylate, umfasst.

13. Verfahren nach einem der vorhergehenden Ansprüche, **dadurch gekennzeichnet, dass** die mindestens eine acrylathaltige Dispersion nach dem Auftrag unter Verwendung eines UV-Strahlers bei Wellenlängen zwischen 120 und 350 nm, bevorzugt zwischen 150 und 250 nm, insbesondere bevorzugt zwischen 170 und 200 nm, beispielsweise 172 nm, unter Inertgas ausgehärtet wird.

14. Papierlage, bevorzugt eine Dekorpapierlage oder Overlaypapierlage, herstellbar in einem Verfahren nach einem der vorhergehenden Ansprüche, **gekennzeichnet durch** einen Glanzgrad von weniger als 10, bevorzugt weniger als 8, insbesondere bevorzugt weniger als 5.

15. Holzwerkstoffplatte herstellbar in einem Verfahren nach einem der Ansprüche 1-13, **gekennzeichnet durch** einen Glanzgrad von weniger als 10, bevorzugt weniger als 8, insbesondere bevorzugt weniger als 5.

## Claims

1. A method for producing a support material provided with at least one matted with an anti-fingerprint coating, wherein the support material is a paper ply or a wood-based panel, comprising the steps of:
- applying at least one layer of at least one powdered formaldehyde resin to at least one side of the support material;
- melting-on the at least one applied layer of the one powdered formaldehyde resin;
- applying at least one acrylate-containing dispersion to the melted-on formaldehyde resin layer; and
- drying and hardening of the layered structure.

2. The method according to claim 1, **characterized in that** the paper layer is a decorative paper layer or an overlay paper layer.

3. The method according to claim 1, **characterized in that** the wood-based panel is a medium-density fiber (MDF), high-density fiber (HDF) or rough particleboard (OSB), a plywood panel or a wood-plastic composite (WPC) panel.

4. The method according to one of the preceding claims, **characterized in that** the powdered formaldehyde resin, in particular a urea resin, a melamine resin or a phenolic resin, in particular preferably a melamine-formaldehyde resin, is applied to the support material by means of electrostatic charging.

5. The method according to one of the preceding claims, **characterized by** the following steps:
- applying at least one first layer of at least one powdered formaldehyde resin to at least one side of the support material and melting-on the at least one applied layer of powdered resin;
- applying at least one decorative layer to the at least one melted-on formaldehyde resin layer by means of a direct printing process;
- applying at least one additional, second layer of at least one powdered formaldehyde resin to the at least one printed decorative layer;
- melting-on the at least one second layer of the one powdered formaldehyde resin applied to the decorative layer;
- applying at least one acrylate-containing dispersion to the melted-on formaldehyde resin layer; and
- drying and hardening of the coating structure.

6. The method according to claim 5, **characterized in that** at least one undercoat, in particular comprising casein, corn starch or soy protein, is applied to the melted-on formaldehyde resin powder layer before printing.

7. The method according to claim 5 or 6, **characterized in that** at least one primer layer is applied before printing, in particular to the at least one undercoat.

8. The method according to one of claims 5-7, **characterized in that** uniformly abrasion-resistant particles are scattered onto the decorative layer or onto the melted-on formaldehyde resin powder layers.

9. The method according to one of claims 5-8, **characterized in that** at least one further, third layer of at least one powdered formaldehyde resin is applied, in particular to the layer of abrasion-resistant particles.

10. The method according to claim 9, **characterized in that** glass beads are scattered, in particular on the at least one further, third melted-on formaldehyde resin powder layer.

11. The method according to any one of claims 9-10, **characterized in that** at least one further, fourth layer of at least one powdered formaldehyde resin is applied, in particular to the layer of glass beads.

12. The method according to one of the preceding claims. **characterized in that** the at least one acrylate-containing dispersion comprises a radiation-curable acrylate-containing varnish, in particular selected from polyether (meth)acrylates, polyether (meth)acrylates, epoxy (meth)acrylates or urethane (meth)acrylates.

13. The method according to one of the preceding claims, **characterized in that** the at least one acrylate-containing dispersion is cured after application using a UV lamp at wavelengths between 120 and 350 nm, preferably between 150 and 250 nm, in particular preferably between 170 and 200 nm, for example 172 nm, under inert gas.

14. Paper layer, preferably a decorative paper layer or overlay paper layer, producible in a method according to one of the preceding claims, **characterized by** a gloss level of less than 10, preferably less than 8, in particular preferably less than 5.

15. Wood-based panel producible in a method according to any one of claims 1-13, **characterized by** a gloss level of less than 10, preferably less than 8, more preferably less than 5.

## Revendications

1. Procédé de fabrication d'un matériau porteur pourvu d'au moins un revêtement mat avec un revêtement anti-empreinte, dans lequel le matériau porteur est une couche de papier ou une plaque en matériau dérivé du bois comprenant les étapes :
- l'application d'au moins une couche en au moins une résine de formaldéhyde pulvérulente sur au moins un côté du matériau porteur ;
- la fusion d'au moins une couche appliquée en la résine de formaldéhyde pulvérulente ;
- l'application d'au moins une dispersion contenant de l'acrylate sur la couche de résine de formaldéhyde fondue ; et
- le séchage et le durcissement de la structure en couches.

2. Procédé selon la revendication 1, **caractérisé en ce que** la couche de papier est une couche de papier décoratif ou une couche de papier overlay.

3. Procédé selon la revendication 1, **caractérisé en ce que** la plaque en matériau dérivé du bois est une plaque de fibre à moyenne densité (MDF), de fibre à haute densité (HDF) ou à copeaux orientés (OSB), un contreplaqué ou un composite de bois et matière plastique (WPC).

4. Procédé selon l'une quelconque des revendications précédentes, **caractérisé en ce que** la résine de formaldéhyde pulvérulente, en particulier une résine d'urée, une résine de mélamine ou une résine de phénol, en particulier de préférence une résine de mélamine-formaldéhyde est appliquée au moyen de la charge électrostatique sur le matériau porteur.

5. Procédé selon l'une quelconque des revendications précédentes, **caractérisé par** les étapes suivantes :
- l'application d'au moins une première couche d'au moins une résine de formaldéhyde pulvérulente sur au moins un côté du matériau porteur et la fusion d'au moins une couche appliquée d'une résine pulvérulente ;
- l'application d'au moins une couche décorative sur l'au moins une couche de résine de formaldéhyde fondue au moyen d'un procédé d'impression directe ;
- l'application d'au moins une autre deuxième couche d'au moins une résine de formaldéhyde pulvérulente sur l'au moins une couche décorative imprimée ;
- la fusion d'au moins une deuxième couche appliquée sur la couche décorative de l'une résine de formaldéhyde pulvérulente ;
- l'application d'au moins une dispersion contenant de l'acrylate sur la couche de résine de formaldéhyde fondue ; et
- le séchage et le durcissement de la structure en couches.

6. Procédé selon la revendication 5, **caractérisé en ce qu'**avant l'impression sur la couche pulvérulente de résine de formaldéhyde fondue, au moins un apprêt, comprenant en particulier de la caséine, de l'amidon de maïs ou de la protéine de soja est appliqué.

7. Procédé selon la revendication 5 ou 6, **caractérisé en ce qu'**avant l'impression, en particulier sur l'au moins un apprêt, au moins une couche primaire est appliquée.

8. Procédé selon l'une quelconque des revendications 5 à 7, **caractérisé en ce que** des particules résistantes à l'abrasion sont dispersées uniformément sur la couche décorative ou les couches pulvérulentes de résine de formaldéhyde fondues.

9. Procédé selon l'une quelconque des revendications 5 à 8, **caractérisé en ce qu'**au moins une autre troisième couche d'au moins une résine de formaldéhyde pulvérulente est appliquée en particulier sur la couche de particules résistantes à l'abrasion.

10. Procédé selon la revendication 9, **caractérisé en ce que** des billes de verre sont dispersées en particulier sur l'au moins une autre troisième couche pulvérulente de formaldéhyde fondue.

11. Procédé selon l'une quelconque des revendications 9 à 10, **caractérisé en ce qu'**au moins une autre quatrième couche d'au moins une résine de formaldéhyde pulvérulente est appliquée en particulier sur la couche de billes de verre.

12. Procédé selon l'une quelconque des revendications précédentes, **caractérisé en ce que** l'au moins une dispersion contenant de l'acrylate comporte un vernis contenant de l'acrylate durcissable par rayonnement, en particulier sélectionné parmi le polyesther(méth)acrylate, polyéther(méth)acrylate, époxy(méth)acrylate ou uréthane(méth)acrylate.

13. Procédé selon l'une quelconque des revendications précédentes, **caractérisé en ce que** l'au moins une dispersion contenant de l'acrylate est durcie après l'application en utilisant un émetteur d'UV pour des longueurs d'onde entre 120 et 350 nm, de préférence entre 150 et 250 nm, en particulier de préférence entre 170 et 200 nm, par exemple de 172 nm sous gaz inerte.

14. Couche de papier, de préférence couche de papier décoratif ou couche de papier overlay, pouvant être fabriquée dans un procédé selon l'une quelconque des revendications précédentes, **caractérisée par** un degré de brillance de moins de 10, de préférence moins de 8, en particulier de préférence moins de 5.

15. Plaque en matériau dérivé du bois pouvant être fabriquée dans un procédé selon l'une quelconque des revendications 1 à 13, **caractérisée par** un degré de brillance de moins de 10, de préférence moins de 8, en particulier de préférence moins de 5.
